# EUROPÄISCHE PATENTSCHRIFT

(11) **EP 3 046 997 B1**
(45) Veröffentlichungstag und Bekanntmachung des Hinweises auf die Patenterteilung: **20.12.2017**
(21) Anmeldenummer: 14777502.7
(22) Anmeldetag: 21.08.2014
(51) Int. Cl.: C01B 3/02, C10J 3/72, C10J 3/30, C10J 3/60, C10J 3/26

(54) **3-ZONEN-VERGASER UND VERFAHREN ZUM BETREIBEN EINES SOLCHEN VERGASERS ZUR THERMISCHEN UMWANDLUNG VON ABPRODUKTEN UND ABFÄLLEN**
3-ZONE GASIFIER AND METHOD TO OPERATE SUCH A GASIFIER FOR THERMAL CONVERSION OF WASTE PRODUCTS
GAZÉIFIEUR EN 3 ZÔNES ET MÉTHODE POUR FAIRE FONCTIONER CE GAZÉIFIEUR POUR LA CONVERSION THERMIQUE DES DÉCHETS

(30) Priorität: 20.09.2013 DE 102013015920
(43) Veröffentlichungstag der Anmeldung: 27.07.2016
(73) Patentinhaber: Recom Patent & License GmbH, 10709 Berlin (DE)
(72) Erfinder: STREITENBERGER, Hartwig, 07751 Golmsdorf (DE); KABIS, André, 07646 Ottendorf (DE); STÖBER, Reinhard, 96542 Frönitz (DE); ZEPTER, Johannes, 07743 Jena (DE); WILFER, Robert, 07585 Bad Köstritz (DE)
(74) Vertreter: Schmidt, Martin Michael
(86) Internationale Anmeldenummer: PCT/DE2014/000438
(87) Internationale Veröffentlichungsnummer: WO 2015/039640

(56) Entgegenhaltungen:
- WO-A1-01/51591
- WO-A1-2008/059109
- WO-A1-2011/101022
- NL-A- 8 200 417

## Beschreibung

Die Erfindung betrifft eine Vorrichtung in Form eines 3-Zonen-Vergasers gemäß der Gattung der Patentansprüche sowie ein Verfahren zum Betreiben eines solchen Vergasers, bspw. in einer Anordnung zur thermischen Zersetzung von Abprodukten und Abfällen (kohlenstoffhaltige Feststoffe).

Es sind bereits verschiedene Vorrichtungen und Verfahren bekannt, welche die Aufbereitung und/oder Verbrennung und/oder Vergasung von kohlenstoffhaltigen Abprodukten und Abfallstoffen offenbaren.

So sind bspw. aus der EP 0 609 802 A1 eine Vorrichtung und ein Verfahren zur kontinuierlichen Entgasung und/oder Vergasung bekannt. Die Vorrichtung gemäß EP 0 609 802 A1 besteht aus einem schachtartigen Reaktor, in dem die Beschickung, das gasförmige Vergasungsmittel und der erzeugte gasförmige Brennstoff im Gleichstrom absteigend geführt werden. Das Vergasungsmittel wird dabei in einem in der Mantelpartie befindlichen schraubenförmigen Gegenstrom- Wärmetauscher vom gasförmigen Brennstoff vorgewärmt. Dieses vorgewärmte Vergasungsmittel wird in schraubenlinienförmigen oder wellenförmigen Kanälen im keramischen Herdkörper des Reaktors und in einem als Herdabschluss dienenden beweglichen oder festen, in die untere Partie der Beschickung hineinragenden kegel- oder paraboloidförmigen Zentralkörper weiter aufgeheizt. Der Rost wird durch einen Vollkegel oder einen hohlkegelförmigen Ringkörper darstellendes, drehbares, vertikal verschiebbares Gegenstück gebildet, das gegenüber der unteren Herdpartie einen einstellbaren ringförmigen Durchlass zum Abzug des erzeugten gasförmigen Brennstoffs und zum Austrag der festen oder flüssigen Reaktionsprodukte in Form von Asche, Schlacke, Destillationsrückstände offen lässt.

Nachteilig bei dieser technischen Lösung ist, dass die Entgasung und/oder Vergasung der festen Brennstoffe oder Abfallstoffe nicht vollständig erfolgt.
Hinzu kommt, dass der absteigende Gleichstromvergaser auch hinsichtlich der Brennstoffstückigkeit empfindlich ist.
Des Weiteren weist dieser Vergaser ein eher schlechtes Teillastverhalten auf, da bei Teillast die Vergasungsmittelmenge sinkt, die heißen Zonen kleiner werden und die Zwischenzonen mit niedriger Temperatur zunehmen. Dadurch steigt auch der Teergehalt im Produktgas. Ein teerarmes Produkt wird aber nur dann produziert, wenn im Glutbett über den ganzen Querschnitt des Vergasers eine genügend hohe Temperatur (Temperaturstabilität) herrscht und die Pyrolysegase eine geschlossene heiße Reduktionszone durchströmen. Dies ist bei Anlagen mit größeren Abmessungen nicht der Fall und relativ schwierig zu erreichen.
Außer den bedingten und damit leistungsmindernden Verweilzeiten neigt dieser Vergasertyp darüber hinaus zu verfahrensbedingten Verstopfungen und Versetzungen.

Die DE 199 37 521 A1 offenbart ein Verfahren und eine Vorrichtung insbesondere für die Bearbeitung von bereits teilweise zersetzten Abprodukten.
Diese Vorrichtung besteht aus einem schachtartigen, im unteren Teil trichterförmigen Reaktor, in dem die Beschickung der Kohlenstoffteilchen tangential und die Luft als Vergasungsmittel axial eingebracht werden und aufsteigend mittels thermochemischer Reaktion zu Synthesegas umgewandelt wird.
Der kegelstumpfförmige Bodenteil hat weiterhin einen seitlichen Ringspalt, über die die Luft axial in den Reaktorraum eintreten kann und sich mit dem Kohlenstoff- Gasgemisch vermischen kann. Dieses Gasgemisch reißt dabei die Kohlenstoffteilchen aus dem Feststoffbett nach außen aufsteigend mit und wird im Reaktorraum bei bis zu 1.200°C energetisch zu Synthesegas umgewandelt.
Im oberen Teil des Behälters fällt die Strömung nach innen und beruhigt sich, so dass die noch nicht thermisch zersetzten Kohlenstoffteile und die Ascheanteile wieder nach unten fallen. Dort treffen sie auf einen im Zentrum angeordneten Auffangtrichter, der sich bis zum unteren Bereich durchzieht und von einem Schneckenförderer entsorgt wird.

Nachteilig bei dieser technischen Lösung ist, dass die Entgasung und/oder Vergasung der festen Stoffe nicht vollständig erfolgt und sich die Prozessstabilität, aufgrund unkontrollierter Kohlenstoffzuführung mit einhergehender Ablagerung und Verschlackung, insbesondere inerter Anteile, auf dem kegelstumpfförmigen Bodenteil nachteilig verändert und damit zu Verstopfungen und folglich daraus zu unkontrollierbaren Prozessstillstand führen kann.
Des Weiteren wird ein erheblicher Teil der nicht thermisch umgesetzten Kohlenstoffanteile mit der Asche und Schlacke ausgetragen.
Nachteilig ist darüber hinaus auch der damit im Zusammenhang stehende hohe Staub (Kohlenstoff)- und Teeranteil im Produktgas.

DE 44 17 082 C1 offenbart einen Reaktor zum thermischen Vergasen von festem Brennstoff mit einer Brennstoffzuführung im Reaktorboden, einem vertikalen Brennstoffförderer zur Förderung des Brennstoffes in einen mit dem Brennstoff befüllbaren Vergasungsraum, einer in Düsen mündenden Zuführungsleitung für vorerwärmte Primärluft in den Vergasungsraum, einer Ascheabführungsvorrichtung und einem mit Sekundärluft versorgbaren, über dem Vergasungsraum angeordneten Nachverbrennungsraum, in den die aus dem Brennstoff entstandenen Gase gelangen, wobei der Vergasungsraum mit einem im Wesentlichen über seine gesamte Höhe wirksamen Rührwerkzeug versehen ist, an der Oberseite des Vergasungsraumes eine Ascheabführungsöffnung angeordnet ist und in dem Nachverbrennungsraum wenigstens eine Wärmestrahlung reflektierende, wenigstens eine Gasdurchtrittsöffnung aufweisende Wand im Wesentlichen über dem gesamten Innenquerschnitt des Reaktors angeordnet ist.
Die eine Wärmestrahlung reflektierende, wenigstens eine Gasdurchtrittsöffnung aufweisende Wand ist dabei als eine erste domartig geöffnete Wand der Nachbrennkammer mit zentraler Gasdurchtrittsöffnung ausgeführt.
Über dieser ersten domartig geöffneten Wand der Nachbrennkammer ist eine zweite domartig geöffnete Wand angeordnet, welche mit der Wand des Reaktors einen Ringspalt ausbildet, so dass das nachverbrannte Gas umgelenkt wird, wodurch mitgerissene Feststoffpartikel aus dem Gasstrom ausfallen, so dass weitgehend entstaubtes Rohgas am Rohgasausgangsstutzen zur Verfügung steht. Diese technische Lösung dient somit der Verbesserung des thermischen Vergasungsprozesses.

Die DE 10 2008 058 602 A1 offenbart einen Vergaser, welcher einen Vergaserraum mit einem Vergaserfreiraum und einen Vergaserfuß umfasst, wobei der Vergaserfreiraum von einem Vergasermantel umgeben ist und einen Synthesegasausgang an seinem einen, verschlossenen Ende aufweist, und über sein zweites, offenes Ende über den Vergasermantel mit dem Vergaserfuß in Verbindung steht, wobei der Vergaserfuß in seinem Innenraum als ein Vergasertopf ausgebildet ist, in den eine Eintragsvorrichtung sowie mindestens eine Zuführung hineinführen, der Vergasertopf mit dem Vergasermantel einen Isolationsraum umschließt, durch den die Eintragsvorrichtung, die Zuführung, Zentralschacht und die Rührerwelle mit Fördereinrichtung hindurch geführt sind, wobei der Vergaserfußmantel diese haltert, und im Vergaserraum ein Vergaserdom in der Art angeordnet ist, dass zwischen dem Vergaserdom und dem Vergasermantel und/oder dem Vergasertopf ein Spalt generiert ist, wobei der Vergasertopf einen mit Ausnehmungen versehenen Boden gegenüber dem Vergaserraum aufweist, wobei der Boden in einen Zentralschacht mündet, der Zentralschacht in einen Austragsschacht übergeht und Rührerwerkzeuge über eine horizontale Rührerwelle im Vergasertopf drehbar gelagert sind, wobei die Rührerwelle von einer Fördereinrichtung umgeben ist.
Dabei ist der Vergaserdom haubenförmig ausgestaltet und zentrisch in dem Vergaserfreiraum angeordnet. Der Spalt kann dabei als Ringspalt ausgebildet sein.
Der Vergasertopf des Bewegt-Bett-Vergasers gemäß der DE 10 2008 058 602 A1 wird über die Eintragungsvorrichtung mit Abprodukten oder Abfallstoffen befüllt, die vermittels der Rührerwerkzeuge gerühert und über die Ausnehmungen des Bodens mit Vergasungsmittel begast werden, wobei eine Vergasung der Abprodukte oder Abfallstoffe in dem Vergaserfuß und dem Vergaserraum erfolgt, die Vergasungsprodukte durch den Ringspalt gelangen und über den Synthesegasausgang abgeleitet werden, wobei die bei der Vergasung gebildete Asche und Schlacke durch die Ausnehmungen des Bodens über den Zentralschacht und den Austragsschacht vermittels der Austragsvorrichtung abgeführt werden.

Der Nachteil der beiden technischen Lösungen gemäß DE 44 17 082 C1 und DE 10 2008 058 602 A1 besteht darin, dass eine vertikale bzw. horizontale Rührerwelle mit Fördereinrichtung zum Rühren der Abprodukte oder Abfallstoffe vorgesehen ist, welche zu Betriebsstörungen der Vergaser führen können, wenn bspw. Feststoffe in den Abprodukten oder Abfallstoffen die Fördereinrichtung mechanisch blockieren oder wenn es bspw. durch nicht austragbare, agglomerierte, inerte Feststoffe zu Verstopfungen der Vergaser kommt.
Darüber hinaus haben diese beiden technischen Lösungen den Nachteil, dass der Vergasungsprozess durch verfahrensbedingte und wechselnde thermochemische Reaktionen, insbesondere auch durch entstehenden Wärmestau, starken Schwankungen unterliegt und somit instabil verlaufen kann, und sich die ungenügende Verweilzeit der Abprodukte oder Abfallstoffe im Vergaser nachteilig auf die vollständige Vergasung der Kohlenstoffpartikel sowie die Aufspaltung von Teeren und Phenolen auswirkt, so dass ein teer- und staubbelastetes Rohgas erzeugt wird.

Der Erfindung liegt daher die Aufgabe zu Grunde, die zuvor stehenden Nachteile des Standes der Technik zu vermeiden und eine Vorrichtung in Form eines 3-Zonen-Vergasers anzugeben, welcher insbesondere eine längere Verweilzeit und damit eine qualitative und quantitative höhere Kohlenstoffumwandlung sowie eine Leistungssteigerung des Vergasungsprozesses initiiert, verfahrensbedingte Verstopfungen, Versetzungen und Überfüllung des Vergasers durch inerte Feststoffe bzw. Schlacke bildenden Störstoffe verhindert, eine Intensivierung der konvektiven Wärmeübertragung in die Kohlenstoffpartikel mittels Wandlung quasi laminarer in turbulente Strömung durch strömungsgestaltende Vorrichtungen und Fixierung adaptiver Vergasungszonen organisiert, eine Stabilisierung des Vergasungsprozesses durch separate Zuführung von z.B. Schwelgasen, Vergasungsmittel, Heißdampf etc. in die Vergasungszonen oberhalb des fluidisierten Festbetts gewährleistet sowie eine differenzierte und höhere Prozess- und Temperaturstabilität durch steuerungstechnische Einflussnahme mittels strömungstechnischen Führungen innerhalb der Vergasungszonen ohne Gas- und Wärmestau erreichen und ein nahezu teer- und staubbelastetes Rohgas erzeugt.

Gelöst wird diese Aufgabe durch einen Vergaser gemäß 1. Patentanspruch und durch ein Verfahren gemäß 9. Patentanspruch. Vorteilhafte Ausgestaltungen sind in den nachgeordneten Patentansprüchen angegeben.

Das Wesen der Erfindung besteht darin, dass durch den erfindungsgemäßen 3-Zonen-Vergaser und durch das erfindungsgemäße Verfahren zum kontinuierlichen Betreiben eines solchen bspw. in einer Anordnung zur thermischen Umwandlung mit Gasbehandlung von kohlenstoffhaltigen Abprodukten und/oder Abfallstoffen (auch kohlenstoffhaltige Feststoffe genannt) eine thermochemische Umwandlung dieser Abprodukte und Abfallstoffe in ein nutzbares, hochwertiges und energiereiches Prozessgas ermöglicht wird, wobei die kohlenstoffhaltigen Abprodukte und Abfallstoffe (insbesondere die noch nicht vollständig zersetzten Kohlenstoffe aus End- und Vergasungsprozessen) weiter und möglichst vollständig umgesetzt werden, so dass eine prozesstechnische Nutzung möglichst schadstoff-, teer- und staubfrei gemäß den entsprechenden Umweltstandards erfolgen kann.

Der erfindungsgemäße Vergaser (auch als 3-Zonen-Vergaser bezeichnet) umfasst einen Vergasertrog mit Abschlusswänden, die bspw. wannen-, trog-, topf- oder muldenförmig ausgeführt sind, und einen Lochboden, der vorteilhafterweise rinnenförmig ist und eine freien Lochfläche im Verhältnis zur begrenzenden Fläche zum Abwurfschacht von ca. 8 - 12% aufweist.

Der Vergasertrog ist dabei von einer Ummantelung umgeben, weist einen Stoffaustrag auf und ist von einem Trennraum umgeben, der in einen Abwurfschacht mündet.

Der 3-Zonen-Vergaser verfügt darüber hinaus über einen über dem Vergasertrog angeordneten Vergasermantel mit Isolierung, der vorzugsweise röhrenförmig ist und vorzugsweise mittels Auflager fixiert wird.

Der Vergasermantel trägt den Vergaserkopf, wobei der Vergaserkopf ebenfalls mit einer Isolierung versehen ist und vorteilhaft mit einem Serviceschott sowie einer Evakuierungsleitung versehen ist.

Der Vergasertrog, der Vergasermantel und der Vergaserkopf sind gasdicht miteinander verbunden.

Der Vergasermantel und der Vergaserkopf umschließen einen Vergaserfreiraum, wobei sich im oberen Teil des Vergasermantels ein Synthesegasaustrag befindet.

Der 3-Zonen-Vergaser ist mit einem Störstoffaustrag versehen, weist eine alles umfassende Ummantelung sowie einen in den Vergasertrog führenden, vorzugsweise waagerecht sowie ca. zwei Drittel unterhalb der Füllgrenze des Feststoffs einmündenden Feststoffeintrag auf.

Der Vergaser ist mit einer flexiblen Verbindung versehen, die je nach Anordnung und Erfordernis eine Einbindung des Vergasers in eine thermische Prozesslinie (bzw. in einer Großanlage oder im separaten Betrieb) ermöglicht.

Der unterhalb des Lochbodens angeordnete Abwurfschacht ist mit einer Schleuse versehen und mündet in eine Austragsvorrichtung für Reststoffe.

In den Abwurfschacht mündet gleichzeitig eine Vergasungsmittelzuführung und oberhalb der Füllgrenze ist im Vergasertrog ein Injektor zur separaten Zuführung von Schwelgasen, Vergasungsmittel, Heißdampf etc. vorgesehen.

Im Bereich oberhalb der Flanschverbindung zwischen Vergasertrog und Trennraumraum ist im Vergaserfreiraum zentral ein auf beiden Seiten offener ummantelter Kegelstumpf angebracht, der sich in Richtung Vergaserkopf verjüngt und den Vergasertrog glockenförmig/ haubenartig überragt.
Dieser ummantelte Kegelstupf weist an seiner offenen, zum Vergasertopf gerichteten Seite eine zentrale Ringspaltöffnung auf, die durch ein Strömungsventil generiert wird.

Dieses Strömungsventil wird aus dem Strömungsring (d.h. der oberen, zum Vergasertopf gerichteten Kante des Kegelstumpfs), welcher einen Ventilsitz darstellt, und einem zentral unmittelbar über dem Strömungsring angeordneten Strömungsventilkörper, welcher vorzugsweise kugelförmig ausgeführt ist, gebildet.
Der Strömungsventilkörper weist dabei eine zentrische Führung und eine Arretierung mit Hubeinrichtung, welche sich außerhalb des Vergaserkopfes befindet und durch den Vergaserkopf geführt ist, auf. Vermittels der Führung mit Hubeinrichtung ist der Strömungsventilkörper gegenüber dem Strömungsring bewegbar und reguliert damit die Dimension der zentralen Ringspaltöffnung des Strömungsventils.

Alternativ dazu besteht natürlich auch die Möglichkeit, dass der Strömungsring gegenüber dem Strömungsventilkörper bewegbar ist, in dem der Kegelstumpf beweglich ausgestaltet ist, bspw. in dem er mit einer Hubeinrichtung, welche sich außerhalb des Vergaserkopfes befindet, und vermittels eines Hubgestänges, dass durch den Vergaserkopf geführt ist, gesteuert vertikal bewegt wird.

Wesentlich bei beiden technischen Lösungen ist, dass zwischen dem oberen Teil des ummantelten Kegelstumpfs und dem Strömungsventil eine zentrale Ringspaltöffnung generiert ist, welche über die zentrische Führung vermittels der Hubeinrichtung in ihrer Dimension verändert/eingestellt wird (erster Strömungskanal), und dass die Ummantelung des Kegelstumpfs mit einer an der Innenseite des Vergasermantels umlaufenden Leitwand eine radiale Ringspaltöffnung ausbildet (zweiter Strömungskanal), wobei je nach Ausgestaltung der erste oder der zweite oder der erste und der zweite Strömungskanal regulierbar sind.

Durch diese zwei regulierbaren Strömungskanäle, die organisierte Füllgrenze eines eingetragenen Feststoffs, der zu einem fluidisierten Festbett führt und dem/der speziellen Vergaseraufbau/Vergasergeometrie entstehen drei Zonen im Vergaser:
- eine adaptive Vergasungszonen Z1 im fluidisierten Festbett,
- eine adaptive Vergasungszonen Z2 oberhalb des fluidisierten Festbetts sowie im inneren Bereich des ummantelten Kegelstupfes und
- eine adaptive Vergasungszonen Z3 im inneren Bereich des Vergasertrogs und im Vergaserfreiraum.

Es versteht sich, dass dabei günstiger Weise alle Verbindungen, Ein- und Austräge des Vergasers gas- und druckdicht ausgeführt sind und der Vergaser wärmetechnisch isoliert ist.

Bei dem Verfahren zum Betreiben des zuvor beschriebene 3-Zonen-Vergaser wird dieser vorzugsweise in eine an sich bekannten Anordnung zur thermischen Umwandlung von Abprodukten und/oder Abfallstoffen als Vergaser für die Umwandlung mit Gasbehandlung eingebunden (der 3-Zonen-Vergaser kann aber auch separat betrieben werden), wobei der Vergasertrog über den Feststoffeintrag mit den kohlenstoffhaltigen Feststoffen bzw. Feststoff/Gasgemisch befüllt und über den im unteren Teil des Vergasertrogs angeordneten rinnenförmigen Lochboden unter kontrollierter Zugabe vorgewärmten Vergasungsmittels vermittels Vergasungsmittelzuführung aufsteigend von unten nach oben beaufschlagt wird, so dass es in der adaptiven Vergasungszone Z1 im temperaturerforderlichen Betriebszustand, vorzugsweise bei ca. 800 °C, zu einem fluidisierten Aufschwimmen des Festbetts mit einhergehender reaktiven thermochemischen Umwandlung der kohlenstoffhaltigen Feststoffe zu einem heizwertreichen Synthesegas kommt.

Der beim Aufschwimmen freigesetzte und noch nicht umgewandelte Feststoff erfährt in der nachfolgenden adaptiven Vergasungszone Z2, oberhalb der Füllgrenze, eine weitere thermochemische Umwandlung, vorzugsweise bei ca. 1300 °C, hervorgerufen durch eine intensive konvektive Wärmeübertragung und gedämpften Strömungsgeschwindigkeit des Gasgemisches mittels des über dem fluidisierten Festbett angeordneten ummantelten Kegelstupfs.

Dieser Vorgang wird durch eine separate Einbringung von Schwelgasen, Vergasungsmittel, Heißdampf etc. über den Injektor in die Vergasungszone Z2 und der komplexen Gasführung über die radiale Ringspaltöffnung, der gesteuerten zentralen Ringspaltöffnung im oberen Teil des ummantelten Kegelstumpfs und parallelem Strömungskanal insoweit verstärkt, das sich der quasi laminare Strömungsprozess in einen turbulenten Strömungsprozess verändert und sich somit leistungssteigernde Turbulenzen einstellen.

Die Geschwindigkeitsverteilung über die adaptiven Vergasungszonen, insbesondere am turbulenten Übergang des zentralen Ringspalts und Strömungskanal in den verfügbaren Vergaserfreiraum, der adaptiven Vergasungszone Z3, vorzugsweise bei ca. 950°C, wirkt sich verlängernd auf die Verweilzeit des noch vorhandenen und schwebenden Restkohlenstoffs und dessen vollständigen Umsetzung in Synthesegas aus.

Durch die spezifische Gasführung mit den prozessstabilisierenden Vergasungs- und Temperaturzonen Z1 bis Z3 und einem verfügbaren Vergaserfreiraum werden die organischen Verbindungen, insbesondere auch Teer, nahezu vollständig zerstört und in ein heizwertreiches Synthesegas gewandelt.

Einhergehend damit, sinken die inerten Fremdstoffe (Asche, Schlacke, Steine, mineralische Reststoffe etc.) mit höherer Dichte als das fluidisierte Kohlenstoffgemisch ab und werden über den rinnenförmigen Lochboden, Auswurfschacht, Schleuse und Austragsvorrichtung ausgetragen. Die nicht abtrennbaren Reststoffe über dem rinnenförmigen Lochboden, werden über den Störstoffaustrag, vorzugsweise Schnecke/Wendel, entfernt.

Selbige Vorrichtung regelt den erforderlichen Füllungsgrad im Vergasertrog und damit die Füllgrenze der kohlenstoffhaltigen Feststoffe. Die Kohlenstoffanteile können weiternutzend in den Vorprozess und/oder nach Abtrennung der Fremdstoffe wieder in den Vergaser zurückgeführt werden.

Das so entstandene Synthesegas, im Wesentlichen bestehend aus CO, H₂, CH₄ und CO₂, wird im oberen Teil des Vergasers abgezogen und nach einem Reinigungs- und Abkühlungsprozess der weiteren Nutzung zugeführt.

Vorteilhaft für die kontinuierliche Prozessführung sind insbesondere die räumliche Aufteilung in adaptive Vergasungszonen Z1 bis Z3, die Stabilisierung und Verbesserung des Vergasungsprozesses mit Schwelgasen etc. und die durch den ummantelten Kegelstumpf mit Strömungsventil über zwei Strömungskanäle veränderbaren Strömungsverhältnisse sowie die steuerungstechnische Einflussnahme des Vergasungsprozesses (Temperatur und Druck) unter gezielten atmosphärischen und stöchiometrischen Bedingungen.

Der Vorteil des zuvor stehend geschilderten 3-Zonen-Vergasers und des Verfahrens zum Betreiben dieses Vergasers bestehen in einer längeren Verweilzeit und einer damit verbundenen qualitative und quantitative höheren Kohlenstoffumwandlung sowie in einer Leistungssteigerung des Vergasungsprozesses, wobei verfahrensbedingte Verstopfungen, Versetzungen und Überfüllung des Vergasers durch inerte Feststoffe bzw. Schlacke bildenden Störstoffe verhindern werden.

Darüber hinaus führen der 3-Zonen-Vergaser und das Verfahrens zum Betreiben dessen zu einer Intensivierung der konvektiven Wärmeübertragung in die Kohlenstoffpartikel mittels Wandlung quasi laminarer in turbulente Strömung durch die strömungsgestaltende Vorrichtungen und durch die Organisation adaptiver Vergasungszonen.

Des Weiteren wird eine Stabilisierung des Vergasungsprozesses durch die separate Zuführung bspw. von Schwelgasen, Vergasungsmittel, Heißdampf etc. in die Vergasungszonen oberhalb des fluidisierten Festbetts gewährleistet sowie eine differenzierte und höhere Prozess- und Temperaturstabilität durch steuerungstechnische Einflussnahme mittels strömungstechnischen Führungen mit Hilfe der zwei Strömungskanäle innerhalb der Vergasungszonen Z1 bis Z3 ohne Gas- und Wärmestau erreichet, so dass ein nahezu vollständig entstaubtes Rohgas erzeugt werden kann.

Die Erfindung wird nachstehend anhand der schematischen Zeichnungen näher erläutert. Es zeigen:
- Fig. 1:: eine schematische Schnittdarstellung einer Ausführungsform des erfindungsgemäßen 3-Zonen-Vergasers,
- Fig. 2:: eine schematische Darstellung einer Außenansicht des 3-Zonen-Vergasers gemäß Figur 1 und
- Fig. 3:: eine schematische Übersichtsdarstellung einer Anordnung zur thermischen Umwandlung von kohlenstoffhaltigen Abprodukten und/oder Abfallstoffen mit Gasbehandlung unter Verwendung/Einbindung des 3-Zonen-Vergasers gemäß Figur 1.

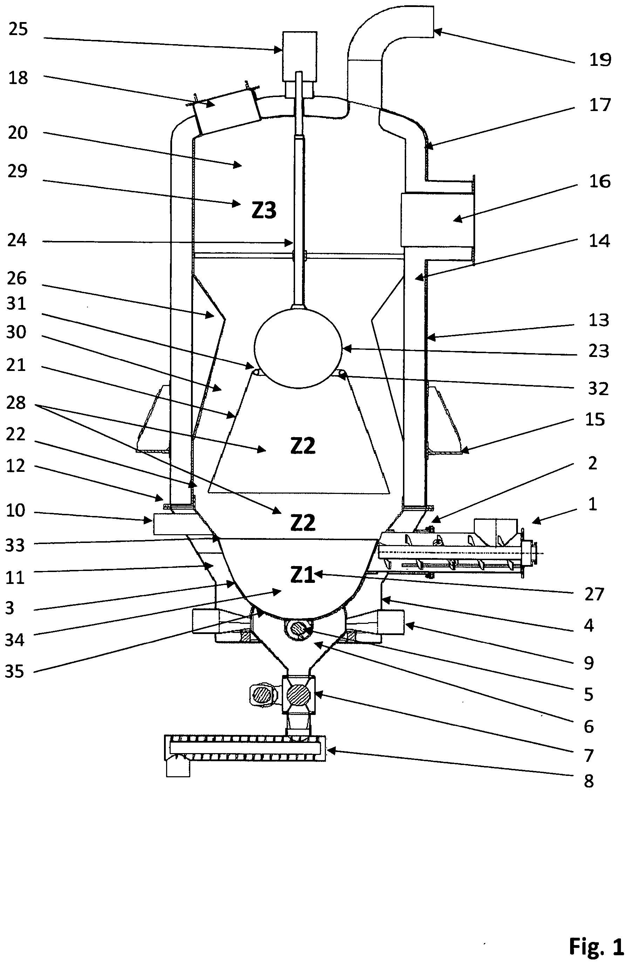

Der in Fig. 1 dargestellte 3-Zonen-Vergaser umfasst einen unteren Vergasertrog (3) mit Ummantelung (4) und einen darüber angeordneten, vorzugsweise rhrenförmigen Vergasermantel (13) mit einer Isolierung (14), einem Synthesegas-austrag (16), einem Vergaserkopf (17) mit Serviceschott (18) und Evakuierungsleitung (19), wobei der Vergasertrog (3), die Ummantelung (4) und der Auswurfschacht (6) mit dem Vergasermantel (13) gasdicht verbunden sind und der Vergasermantel (13) über ein Auflager (15) fixiert wird.

Der Vergasertrog (3) ist vorzugsweise halbröhrenförmig mit seitlichen Abschlusswänden und von oben nach unten verjüngend mit einem vorzugsweise rinnenförmigen Lochboden (35), einem in diesen angeordneten Störstoffaustrag (5) in Längsachse, einem Feststoffeintrag (1), vorzugsweise waagerecht mit Förderwendel, und flexible Verbindung (2), vorzugsweise zwei Drittel unterhalb der Füllgrenze (33), und einem Injektor (10), welcher oberhalb der Füllgrenze des fluidisierten Festbetts (34) platziert ist, ausgeführt.

Unterhalb des Vergasertrogs (3), der vorzugsweise mit einem rinnenförmigen Lochboden (35) versehen ist, im Trennraum (11), zwischen Vergasertrog (3) und Ummantelung (4), befindet sich ein Abwurfschacht (6) mit einer Vergasungsmittelzuführung (9), welche einfach oder mehrfach ausgeführt sein kann.
Der Abwurfschacht (6) ist mit einer Schleuse (7), vorzugsweise Zellenradschleuse, und einer Austragsvorrichtung (8), vorzugsweise Förderwendel oder Rohrkettenförderer, verbunden.

Oberhalb der Flanschverbindung (12) ist zentral und innerhalb des Vergasermantels (13) mit Isolierung (14) ein ummantelter Kegelstumpf (21), der von unten nach oben verjüngt und vorzugsweise in der Fläche geschlossen ausgeführt ist, so angeordnet, dass zwischen diesen eine radiale Ringspaltöffnung (22) und am oberen Teil des ummantelten Kegelstupfs (21) durch den Strömungsring (31) und einem zentrisch darüber angeordnetem Strömungsventilkörper (23) eine zentrale Ringspaltöffnung (32) entsteht [s.g. Strömungsventil zur Generierung der Ringspaltöffnung (32)].

Nahezu parallel zum ummantelten, auf beiden Seiten offenen Kegelstumpf (21) befindet sich an der Innenseite des Vergasermantels (13) eine umlaufende Leitwand (26), die vorzugsweise kantig und/oder segmentiert ausgeführt ist, so dass ein Strömungskanal (30) zwischen dem Kegelstumpf (21) und der Leitwand (26) ausgebildet ist.

Im Vergaserfreiraum (20) unterhalb des Vergaserkopfs (17) befindet sich die zentrische Führung mit Arretierung (24) für den Strömungsventilkörper (23), wobei diese Führung mit einer Hubeinrichtung (25) zur vertikalen Verstellung des Strömungsventilkörpers (23) verbunden ist. Dabei befindet sich die Hubeinrichtung (25) außerhalb des 3-Zonen-Vergasers und oberhalb des Vergaserkopfs (17).

Des Weiteren entstehen durch den adaptiven Aufbau des 3-Zonen Vergasers [regelbare Dimension der zentralen Ringspaltöffung (32)] und gezielt prozessverbessernden Vergasungszonen und -temperaturen und turbulenten Strömungen, insbesondere im fluidisierten Festbett (34) mit adaptiver Vergasungszone Z1 (27), zwischen der Füllgrenze (33) und ummantelter Kegelstumpf (21) mit adaptiver Vergasungszone Z2 (28), im Vergaserfreiraum (20) mit adaptiver Vergasungszone Z3 (29).

Darüber hinaus kann vorteilhafter Weise der Strömungsventilkörper (23) wahlweise und gezielt kugel-, kegel-, halbschalenförmig, flächig oder zylindrisch ausgeführt werden, was insbesondere einen Einfluss auf die Strömungs- und Temperaturbedingungen, welche durch die regelbare Dimension der zentralen Ringspaltöffung (32) gesteuert werden, hat.

Des Weiteren kann die Leitwand (26) wahlweise und gezielt eckig, rund, oval, faltig und/oder profiliert ausgeführt werden.

Zur prozessbedingten Einflussnahme kann der ummantelte Kegelstumpf (21) perforiert, gelocht, geschlitzt und/oder siebförmig ausgestalte, werden.

Der halbschalenförmige Vergasertrog (3) sollte eine freie Lochfläche im Verhältnis zur begrenzenden Fläche zum Abwurfschacht (6) von ca. 8% - 12% aufweisen.

Dieser 3.Zonen Vergaser wird wie folgt betrieben:

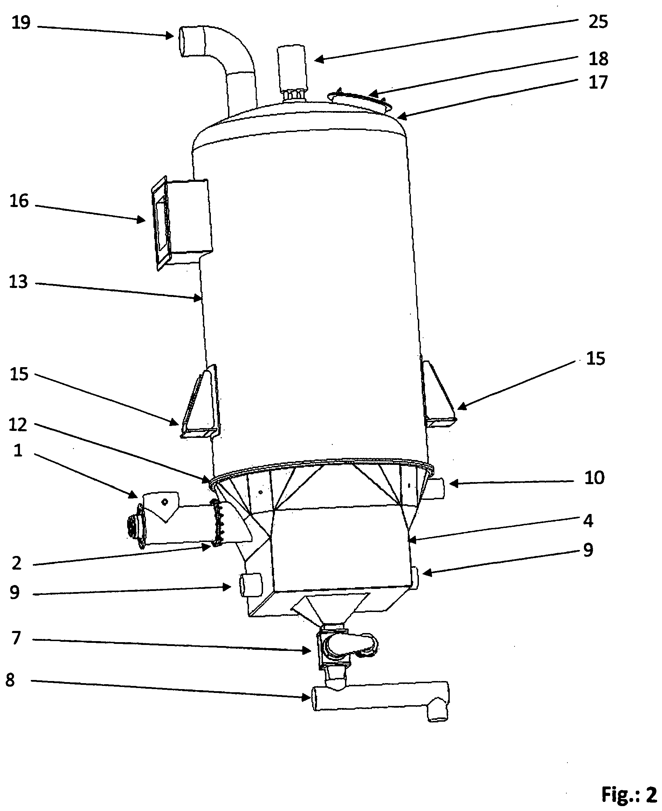

Der in Fig.1 und Fig. 2 dargestellte 3-Zonen-Vergaser ermöglicht eine kontinuierliche Umwandlung kohlenstoffhaltiger Feststoffe über eine gezielte partielle Oxidation und Reduktion (autotherme Prozessführung) mittels der drei adaptiven Vergasungszonen Z1 und Z2 (27 und 28) sowie Z3 (29) mit Nachreduktion und -oxidation unter definierten atmosphärischen Bedingungen. Der 3-Zonen-Vergaser wird im Betriebszustand von unten (quasi laminarer Strömungsprozess) nach oben (adaptierter turbulenter Strömungsprozess) im Gleichstrom aufsteigend durchströmt.

Die kohlenstoffhaltigen Feststoffe bzw. Feststoff/Gasgemische werden im Betriebszustand des 3-Zonen-Vergasers seitlich mittels eines waagerecht angeordneten Feststoffeintrags (1), vorzugsweise Förderwendel, mit flexibler Verbindung (2) durch die Ummantelung (4) in den Vergasertrog (3) eingebracht. Der Feststoffeintrag (1) ist dabei vorzugsweise ca. zwei Drittel unterhalb der Füllgrenze (33) zu platzieren.

Über die Vergasungsmittelzuführung (9), die vom Trennraum (11) umschlossen ist, welcher sich zwischen der Ummantelung (4) und dem Vergasertrog (3) befindet, wird dann das Vergasungsmittel wie folgt zugeführt:
Der kohlenstoffhaltige Feststoff bzw. ein Feststoff/Gasgemisch wird im Betriebszustand bis zur Füllgrenze (33) in den Vergasertrog (3) eingebracht und über die Vergasungsmittelzuführung (9) und den Abwurfschacht (6) mit vorgewärmten Vergasungsmittel über den rinnenförmigen Lochboden (35), der in Richtung der Längsachse angeordnet ist, von unten nach oben beaufschlagt.

Durch die aufwärts gerichtete Strömung wird das Festbett in einen fluidisierten Zustand versetzt und die Redoxreaktionen, vorzugsweise bei ca. 800°C, in Gang gesetzt. Das damit einhergehende Aufschwimmen im Bereich der Füllgrenze (33) des kohlenstoffhaltigen Feststoffs führt zum vermehrten Austrag feiner Kohlenstoffpartikel in die adaptive Vergasungszone Z2 (28).
Unter Hinzugabe von bspw. Schwelgasen aus einem Vorprozess, andere Vergasungsmittel, Heißdampf etc. über den Injektor (10) in die Vergasungszone Z2 (28) erfährt der freigesetzte Kohlenstoff eine weitere thermochemische Umwandlung (Oxidation und Reduktion), vorzugsweise bei ca. 1300 °C, hervorgerufen durch eine intensive konvektive Wärmeübertragung und gedämpften Strömungsgeschwindigkeit des Stoff/Gasgemisches mittels des über dem fluidisierten Festbett (34) oberhalb der Flanschverbindung (12) angeordneten ummantelten Kegelstupfs (21).

Durch eine komplexe Gasführung im Bereich der Flanschverbindung (12) über die radiale Ringspaltöffnung (22), im Bereich der gesteuerten zentralen Ringspaltöffnung (32) im oberen Teil des ummantelten Kegelstumpfs (21) und dem nahezu parallelem Strömungskanal (30), welcher durch die Innenwand des Vergasermantels (13) mit Isolierung (14) und die Leitwand (26) begrenzt wird, wird der Prozess im 3-Zonen-Vergaser insoweit verstärkt, dass sich der quasi laminare Strömungsprozess in einen turbulenten Strömungsprozess verändert und sich somit leistungssteigernde Turbulenzen im Sinne der Gasleistung und des Heizwertes, eine Nachreduktion /-oxidation des Stoff/Gasgemisches, zu einem hoch nutzbaren Synthesegases einstellen.

Die Geschwindigkeitsverteilung über die adaptiven Vergasungszonen Z1, Z2 und Z3, insbesondere am turbulenten Übergang zwischen dem Ringspalt (32), dem Strömungsring (31) mit dem darüber angeordneten Strömungsventilkörper (23) sowie dem zwischen dem ummantelten Kegelstumpf(21) und der Leitwand (26) ausgebildeten Strömungskanal (30), wirkt sich im Vergaser-freiraum (20) bei etwa 950°C verlängernd auf die Verweilzeit des noch vorhandenen und schwebenden Restkohlenstoffs und dessen nahezu vollständigen Umsetzung in Synthesegas aus.

Das so entstandene Synthesegas, im Wesentlichen bestehend aus CO, H₂, CH₄ und SO₂, wird über den Synthesegasaustrag (16) im oberen Teil des Vergasermantels (13) zur weiteren Behandlung und/oder Nutzung aus dem Vergaser abgeführt.

Die Steuerung des Strömungsventilskörpers (23) erfolgt dabei mittels der zentrischen Führung (24) mit Arretierung und der dazugehörigen Hubeinrichtung (25), wobei eine vertikale Verstellung des Strömungsventilkörpers (23) erfolgt, um die Ringspaltöffnung (32) in ihrer Dimension zu regulieren.

Einhergehend mit der thermochemischen Umsetzung des Kohlenstoffs im fluidisierten Festbett (34) und einstellenden Mehrphasenströmung in diesem, sinken die Objekte mit höherer Dichte ab und die Objekte mit geringerer Dichte schwimmen auf. Die so absinkenden Inerte (Metall, Steine, Sand, Keramik etc.) und/oder agglomerierte Asche und Schlacke werden zum einen über den rinnenförmigen Lochboden (35), den Auswurfschacht (6), die Schleuse (7), vorzugsweise als Zellenradschleuse ausgeführt, und die Austragsvorrichtung (8), ausgetragen, wobei die größeren Fremdstoffe über den Störstoffaustrag (5) abgeführt werden.

Zur Prozessstabilität und Sicherung der kontinuierlichen Fahrweise des Vergasers regelt der Störstoffaustrag (5) des Weiteren den erforderlichen Füllungsgrad im Vergasertrog (3) und damit die Füllgrenze (33) der eingetragenen kohlenstoffhaltigen Feststoffe.

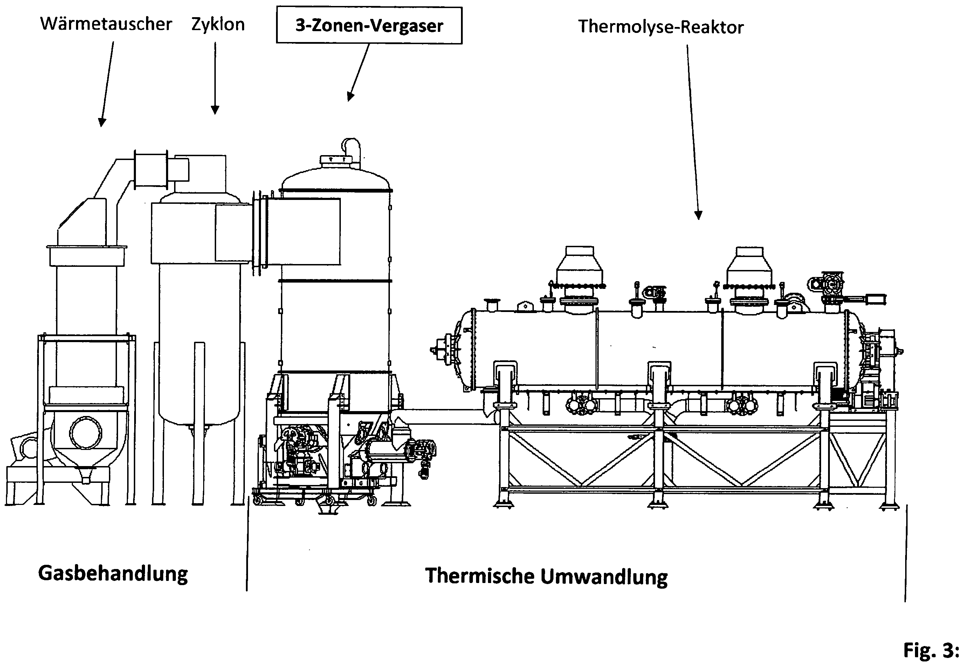

Der zuvor beschriebene 3-Zonen-Vergaser kann, wie in Fig. 3 dargestellt, an Stelle eines bisher bekannten Vergasers in eine bestehende oder neue Anordnung zur thermischen Umwandlung von Abprodukten und/oder Abfallstoffe bzw. kohlenstoffhaltigen Feststoffen oder auch als Einzelaggregat eingesetzt werden und dient dabei der Umwandlung und Gasbehandlung.

Wesentliche Vorteilteile des erfindungsgemäßen 3-Zonen-Vergaser besteht insbesondere darin, eine längere Verweilzeit und damit qualitative und quantitative höhere Kohlenstoffumwandlung und Leistungssteigerung zu initiieren, verfahrensbedingten Verstopfungen, Versetzungen und Überfüllung des Vergasers durch inerte bzw. Schlacke bildenden Störstoffe zu verhindern, eine Intensivierung der konvektiven Wärmeübertragung in die Kohlenstoffpartikel mittels Wandlung quasi laminarer in turbulente Strömung durch strömungsgestaltende Vorrichtungen und Fixierung adaptiver Vergasungszonen zu organisieren, eine Stabilisierung des Vergasungsprozesses durch separate Zuführung von z.B. Schwelgasen, Vergasungsmittel, Heißdampf etc. in die Vergasungszonen oberhalb des fluidisierten Festbetts zu gewährleisten, eine differenzierte und höhere Prozess- und Temperaturstabilität durch steuerungstechnische Einflussnahme mittels strömungstechnischen Führungen innerhalb der Vergasungszonen ohne Gas- und Wärmestau zu erreichen.

Durch die Verwendung dieses Vergasers gegenüber dem Stand der Technik können die kohlenstoffhaltigen Feststoffe nahezu vollständig umgesetzt werden, so dass nahezu vollständig entstaubte Rohgase gewonnen werden können.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

### Bezugszeichenliste

- 1: - Feststoffeintrag
- 2: - flexible Verbindung
- 3: - Vergasertrog
- 4: - Ummantelung
- 5: - Störstoffaustrag
- 6: - Abwurfschacht
- 7: - Schleuse
- 8: - Austragsvorrichtung
- 9: - Vergasungsmittelzuführung
- 10: - Injektor
- 11: - Trennraum
- 12: - Flanschverbindung
- 13: - Vergasermantel
- 14: - Isolierung
- 15: - Auflager
- 16: - Synthesegasaustrag
- 17: - Vergaserkopf
- 18: - Serviceschott
- 19: - Evakuierungsleitung
- 20: - Vergaserfreiraum
- 21: - ummantelter Kegelstumpf
- 22: - radiale Ringspaltöffnung
- 23: - Strömungsventilkörper
- 24: - zentrische Führung
- 25: - Hubeinrichtung
- 26: - Leitwand
- 27: - adaptive Vergasungszone (Z1)
- 28: - adaptive Vergasungszone (Z2)
- 29: - adaptive Vergasungszone (Z3)
- 30: - Strömungskanal
- 31: - Strömungsring
- 32: - zentrale Ringspaltöffnung
- 33: - Füllgrenze
- 34: - fluidisiertes Festbett
- 35: - Lochboden

- Z1: - erste Vergasungszone
- Z2: - zweite Vergasungszone
- Z3: - dritte Vergasungszone

## Patentansprüche

1. 3-Zonen-Vergaser umfassend eine Ummantelung (4), welche einen Vergasertrog (3) umgibt, einen über dem Vergasertrog (3) angeordneten, mit einer Isolierung (14) versehenen Vergasermantel (13), einen über dem Vergasermantel (13) angeordneten, mit einer Isolierung (14) versehenen Vergaserkopf (17) und einen Vergaserfreiraum (20), der von dem Vergasermantel (13) und dem Vergaserkopf (17) umschlossen wird, wobei
• der Vergasertrog (3), der Vergasermantel (13) und der Vergaserkopf (17) gasdicht miteinander verbunden sind,
• sich mindestens ein Synthesegasaustrag (16) im oberen Teil des Vergasermantels (13) befindet,
• der Vergasertrog (3) einen Lochboden (35) aufweist und von einem Trennraum (11) umgeben ist, der in mindestens einen Abwurfschacht (6) mündet,
• mindestens ein Feststoffeintrag (1) in den Vergasertrog (3) einmündet,
• der Abwurfschacht (6) eine Schleuse (7) aufweist und unterhalb des Lochbodens (35) in eine Austragsvorrichtung (8) für Reststoffe mündet,
• mindestens eine Vergasungsmittelzuführung (9) in den Abwurfschacht (6) führt,
• mindestens ein Injektor (10) oberhalb der Füllgrenze in den Vergasertrog (3) führt, und
• im Bereich der Verbindung zwischen dem Vergasertrog (3) und dem Vergaserfreiraum (20) ein ummantelter Kegelstumpf (21), der an seiner Ober- und Unterseite offen ist, sich in seinem Durchmesser in Richtung des Vergaserkopfes (17) hin verjüngt und glockenförmig über dem Vergasertrog (3) platziert ist, angeordnet ist, welcher gemeinsam mit einer Leitwand (26), die sich an der Innenseite des Vergasermantels (13) befindet, eine radiale Ringspaltöffnung (22) und einen Strömungskanal (30) generiert,
**dadurch gekennzeichnet, dass** die obere, dem Vergaserkopf (17) zugewandte Öffnung des Kegelstumpfs (21) als ein Strömungsventil in der Art ausgeführt ist, dass ein Strömungsventilkörper (23) mit zentrischer Führung (24) über einem Ventilsitz im Form eines Strömungsrings (31) angeordnet ist und dabei eine zentrale Ringspaltöffnung (32) generiert, wobei der Kegelstupf (21) oder der Strömungsventilkörper (23) vertikal beweglich und arretierbar ist, so dass die Ringspaltöffnung (32) in ihrer Dimension durch die vertikale Position des Kegelstupfs (21) oder des Strömungsventilkörpers (23) eingestellt ist, und der Lochboden (35) mit Störstoffaustrag (5) versehen ist.

2. 3-Zonen-Vergaser gemäß Anspruch 1, **dadurch gekennzeichnet, dass** die zentrische Führung (24) durch den Vergaserkopf (17) gasdicht hindurchführt und mit einer außerhalb des Vergaserkopfes (17) angeordneten, steuerbaren Hubeinrichtung (25) arretier- und regelbar verbunden ist.

3. 3-Zonen-Vergaser gemäß Anspruch 1 oder 2, **dadurch gekennzeichnet, dass** der Lochboden (35) rinnenförmig und mit einer freien Lochfläche im Verhältnis zur begrenzenden Fläche zum Abwurfschacht (6) von ca. 8 bis 12% ausgeführt ist.

4. 3-Zonen-Vergaser gemäß Anspruch 1 oder 2, **dadurch gekennzeichnet, dass** der Vergaserkopf (17) ein Serviceschott (18) und eine Evakuierungsleitung (19) aufweist, die durch den Vergasermantel (13) und die Isolierung (14) hindurch führen.

5. 3-Zonen-Vergaser gemäß Anspruch 1 oder 2, **dadurch gekennzeichnet, dass** der Feststoffeintrag (1) eine flexible Verbindung (2) aufweist, eine Förderwendel besitzt und waagerecht in den Vergasertrog (3) einmündet.

6. 3-Zonen-Vergaser gemäß Anspruch 5, **dadurch gekennzeichnet, dass** der Feststoffeintrag (1) nahezu zwei Drittel unterhalb der Füllgrenze (33) des Feststoffs in den Vergasertrog (3) einmündet.

7. 3-Zonen-Vergaser gemäß Anspruch 1 oder 2, **dadurch gekennzeichnet, dass** der Vergasermantel (13) über eine Flanschverbindung(12) den Vergasertrog (3) mit Trennraum (11) und Abwurfschacht (6) vermittels der Ummantelung (4) haltert und durch ein Auflager (15) getragen wird.

8. 3-Zonen-Vergaser gemäß Anspruch 1 oder 2, **dadurch gekennzeichnet, dass** der Kegelstumpf (21) perforiert, gelocht, geschlitzt und/oder siebförmig und der Strömungsventilkörper (23) kugel-, kegel-, halbschalenförmig, flächig oder zylindrisch und die Leitwand (26) eckig, rund, oval, faltig oder profiliert ausgeführt ist.

9. Verfahren zum Betreiben eines 3-Zonen-Vergasers gemäß einem oder mehrerer der voran stehenden Ansprüche 1 bis 8 bei dem der 3-Zonen-Vergaser im Betriebszustand von unten nach oben im Gleichstrom aufsteigend durchströmt wird, wobei eine kontinuierliche Umwandlung kohlenstoffhaltiger Feststoffe über eine gezielte partielle Oxidation und Reduktion vermittels der adaptiven Vergasungszonen Z1 und Z2 sowie vermittels der adaptiven Vergasungszone Z3 mit Nachreduktion und -oxidation unter definierten atmosphärischen Bedingungen erfolgt, wobei die Dimension der zentralen Ringspaltöffung (32) geregelt wird und dadurch turbulente Strömungen erzeugt werden.

10. Verfahren zum Betreiben eines 3-Zonen-Vergasers gemäß Anspruch 9, **dadurch gekennzeichnet, dass**
• der Vergasertrog (3) über den Feststoffeintrag (1) mit kohlenstoffhaltigen Feststoffen oder Feststoff-Gasgemisch befüllt und über den im unteren Teil des Vergasertrogs (3) angeordneten rinnenförmigen Lochboden unter kontrollierter Zugabe vorgewärmten Vergasungsmittels, aufsteigend von unten nach oben, beaufschlagt wird, so dass es in der adaptiven Vergasungszone Z1 im temperaturerforderlichen Betriebszustand bei etwa 800 °C zu einem fluidisierten Aufschwimmen des Festbetts mit einhergehender reaktiven thermochemischen Umwandlung der kohlenstoffhaltigen Feststoffe zu einem heizwertreichen Synthesegas kommt,
• der beim Aufschwimmen freigesetzte und noch nicht umgewandelte Feststoff in der nachfolgenden adaptiven Vergasungszone Z2, oberhalb der Füllgrenze, eine weitere thermochemische Umwandlung bei etwa 1300 °C erfährt,
• dieser Vorgang durch eine separate Einbringung von Schwelgasen, Vergasungsmittel, Heißdampf über den Injektor (10) in die Vergasungszone Z2 und durch die Gasführung über die radiale, gesteuerte Ringspaltöffnung (22) verstärkt wird,
• die sich einstellende Geschwindigkeitsverteilung über die adaptiven Vergasungszonen Z1 und Z2 sowie am turbulenten Übergang der zentralen Ringspaltöffnung (32) zum Vergaserfreiraum (20) der adaptiven Vergasungszone Z3 bei etwa 950°C verlängernd auf die Verweilzeit des noch vorhandenen und schwebenden Restkohlenstoffs und dessen nahezu vollständigen Umsetzung in Synthesegas auswirkt,
so dass die organischen Verbindungen in ein heizwertreiches Synthesegas umgewandelt werden und die inerten Fremdstoffe mit höherer Dichte als das fluidisierte Kohlenstoffgemisch absinken und dabei über den rinnenförmigen Lochboden (35), den Auswurfschacht (6), die Schleuse (7) und die Austragsvorrichtung (8) ausgetragen werden, wobei die nicht abtrennbaren Reststoffe über dem rinnenförmigen Lochboden (35) durch den Störstoffaustrag (5) entfernt und der erforderliche Füllungsgrad der eingetragenen kohlenstoffhaltigen Feststoffe im Vergasertrog (3) und damit die Füllgrenze (33) geregelt werden und das entstandene Synthesegas im oberen Teil des Vergasers abgezogen wird.

## Claims

1. A 3-zone gasifier, comprising a casing (4) surrounding a gasifier trough (3), a gasifier shell (13) arranged above the gasifier trough (3) and provided with an insulation (14), a gasifier head (17) arranged above the gasifier shell (13) and provided with an insulation (14), and a free gasifier space (20) enclosed by the gasifier shell (13) and the gasifier head (17), wherein
• the gasifier trough (3), the gasifier shell (13) and the gasifier head (17) are connected to each other in a gas-tight manner,
• there is at least one syngas outlet (16) in the upper part of the gasifier shell (13),
• the gasifier trough (3) comprises a perforated bottom (35) and is surrounded by a separating space (11) which terminates in at least one discharge chute (6),
• at least one solids inlet (1) terminates in the gasifier trough (3),
• the discharge chute (6) comprises a lock (7) and terminates in an outlet device (8) for residues below the perforated bottom (35),
• at least one gasifying agent supply (9) leads into the discharge chute (6),
• at least one injector (10) leads into the gasifier trough (3) above the filling limit, and
• in the area of the connection between the gasifier trough (3) and the free gasifier space (20), a sheathed, truncated cone (21), which is open both at its top and its bottom, tapers in diameter towards the gasifier head (17) and is placed, in the shape of a bell, above the gasifier trough (3), said truncated cone (21) and a baffle (26) located on the inside of the gasifier shell (13) together generate a radial, annular gap opening (22) and a flow channel (30),
**characterized in that** the upper opening of the truncated cone (21), which faces the gasifier head (17), is provided as a flow control valve in such a manner that a flow control valve body (23) with a centric guide (24) is arranged above a valve seat in the form of a flow ring (31), thereby generating a central, annular gap opening (32), said truncated cone (21) or said flow control valve body (23) being movable vertically and lockable, so that the annular gap opening (32) is dimensionally adjusted by the vertical position of the truncated cone (21) or of the flow control valve body (23), and the perforated bottom (35) is provided with a contaminant discharge (5).

2. The 3-zone gasifier as claimed in claim 1, **characterized in that** the centric guide (24) passes through the gasifier head (17) in a gas-tight manner and is connected, in a lockable and controllable manner, with a lifting device (25) arranged outside the gasifier head (17).

3. The 3-zone gasifier as claimed in claim 1 or 2, **characterized in that** the perforated bottom (35) has a channel-like design and a free aperture surface of approx. 8 to 12% with respect to the area bordering the discharge chute (6).

4. The 3-zone gasifier as claimed in claim 1 or 2, **characterized in that** the gasifier head (17) comprises a servicing access (18) and an evacuation duct (19) which lead through the gasifier shell (13) and the insulation (14).

5. The 3-zone gasifier as claimed in claim 1 or 2, **characterized in that** the solids inlet (1) comprises a flexible connection (2) and a conveyor screw and terminates horizontally in the gasifier trough (3).

6. The 3-zone gasifier as claimed in claim 5, **characterized in that** the solids inlet (1) terminates in the gasifier trough (3) nearly two thirds below the filling limit (33) of the solid.

7. The 3-zone gasifier as claimed in claim 1 or 2, **characterized in that** the gasifier shell (13) holds the gasifier trough (3) with the separating space (11) and the discharge chute (6) via a flange connection (12) by means of the casing (4) and is supported by a bearing (15).

8. The 3-zone gasifier as claimed in claim 1 or 2, **characterized in that** the truncated cone (21) is perforated, pierced, slotted and/or sieve-shaped and the flow control valve body (23) has a ball, cone or half-shell, planar or cylindrical shape and the baffle (26) is angular, round, oval, folded or profiled.

9. A method for operating a 3-zone gasifier as claimed in one or more of the preceding claims 1 to 8, wherein a uniform flow passes upwards from the bottom to the top through the 3-zone gasifier in operation, with a continuous conversion of carbonaceous solids taking place via selective partial oxidation and reduction by means of adaptive gasification zones Z1 and Z2 as well as by means of the adaptive gasification zone Z3 with post-reduction and post-oxidation under defined atmospheric conditions, the dimension of the central annular gap opening (32) being controlled, thereby generating turbulent flows.

10. A method for operating a 3-zone gasifier as claimed in claim 9, **characterized in that**
• the gasifier trough (3) is charged with carbonaceous solids or with a solids/gas mixture via the solids inlet (1) and is loaded, via the channel-shaped perforated bottom arranged in the lower part of the gasifier trough (3), with a pre-heated gasifying agent admitted in a controlled manner, rising up from the bottom to the top, resulting in fluidised floating of the fixed bed in the adaptive gasification zone Z1 in the operating condition required in terms of temperature, at approximately 800 °C, accompanied by a reactive thermochemical conversion of the carbonaceous solids to a syngas with a high calorific value,
• the solid matter released, but not yet converted, during said floating is subject to another thermochemical conversion at approximately 1300 °C in the subsequent adaptive gasification zone Z2, above the filling limit,
• this process is enhanced by separate admission of carbonisation gases, gasifying agent, and hot steam via the injector (10) into the gasification zone Z2 and by guiding the gas over the radial, controlled annular gap opening (22),
• the resulting speed distribution over the adaptive gasification zones Z1 and Z2 and at the turbulent passage from the central annular gap opening (32) to the free gasifier space (20) of the adaptive gasification zone Z3 at approximately 950 °C has a prolonging effect on the dwell time of the still present, floating residual carbon and its nearly complete conversion to syngas,
so that the organic compounds are converted to a syngas of high calorific value and the inert contaminants of higher density than the fluidised carbon mixture descend, thereby being discharged via the channel-shaped perforated bottom (35), the discharge chute (6), the lock (7) and the outlet device (8), removing any unseparable residues above the channel-shaped perforated bottom (35) via the contaminant discharge (5) and controlling the required filling level of the admitted carbonaceous solids in the gasifier trough (3) and, thus, the filling limit (33) and extracting the resulting syngas in the upper part of the gasifier.

## Revendications

1. Gazéifieur à 3 zones, comportant une enveloppe (4) qui entoure un bac de gazéifieur (3), une enceinte de gazéifieur (13), disposée au-dessus du bac de gazéifieur (3) et munie d'une isolation (14), une tête de gazéifieur (17) disposée au-dessus de l'enceinte de gazéifieur (13) et munie d'une isolation (14), et un espace libre de gazéifieur (20) qui est entouré par l'enceinte de gazéifieur (13) et la tête de gazéifieur (17),
où
• le bac de gazéifieur (3), l'enceinte de gazéifieur (13) et la tête de gazéifieur (17) sont reliés les uns aux autres de façon étanche au gaz,
• au moins une évacuation de gaz de synthèse (16) se trouve dans la partie supérieure de l'enceinte de gazéifieur (13),
• le bac de gazéifieur (3) comporte un fond perforé (35), entouré par un espace de séparation (11) qui débouche dans au moins un entonnoir d'évacuation (6),
• au moins un apport de matières solides (1) débouche dans le bac de gazéifieur (3),
• l'entonnoir d'évacuation (6) comporte un sas (7) et débouche dans un dispositif d'évacuation (8) de déchets au-dessous du fond perforé (35),
• au moins un apport d'agents de gazéification (9) débouche dans l'entonnoir d'évacuation (6),
• au moins un injecteur (10) débouche dans le bac de gazéifieur (3) au-dessus de la limite de remplissage,
• dans la région de la liaison entre le bac de gazéifieur (3) et l'espace libre de gazéifieur (20) est disposé un tronc de cône (21) gainé qui est ouvert sur ses côtés supérieur et inférieur, dont le diamètre diminue en direction de la tête de gazéifieur (17) et qui est placé en forme de cloche au-dessus du bac de gazéifieur (3), ledit tronc de cône (21) et une paroi de guidage (26), qui se trouve à l'intérieur de l'enceinte de gazéifieur (13), engendrant ensemble une aperture radiale en fente annulaire (22) et un canal d'écoulement (30),
**caractérisé en ce que** l'aperture supérieure du tronc de cône (21) en face de la tête de gazéifieur (17) est réalisée à la manière d'une vanne d'écoulement, de sorte qu'un corps de vanne d'écoulement (23) avec un guidage centrique (24) soit disposé au-dessus d'une siège de vanne sous forme d'un anneau d'écoulement (31), engendrant ainsi une aperture en fente annulaire centrale (32), le tronc de cône (21) ou le corps de vanne d'écoulement (23) étant déplaçable verticalement et verrouillable, de sorte que l'aperture en fente annulaire (32) soit ajustée dans sa dimension par la position verticale du tronc de cône (21) ou du corps de vanne d'écoulement (23), et le fond perforé (35) est muni d'une évacuation d'impuretés (5).

2. Gazéifieur à 3 zones selon la revendication 1, **caractérisé en ce que** le guide centrique (24) traverse la tête de gazéifieur (17) de façon étanche au gaz et est relié de manière verrouillable et réglable avec un moyen élévateur (25) contrôlable qui est disposé à l'extérieur de la tête de gazéifieur (17).

3. Gazéifieur à 3 zones selon la revendication 1 ou 2, **caractérisé en ce que** le fond perforé (35) est réalisé en forme de gouttière et avec une surface de trou libre d'environ 8 à 12% par rapport à la surface limitante de l'entonnoir d'évacuation (6).

4. Gazéifieur à 3 zones selon la revendication 1 ou 2, **caractérisé en ce que** la tête de gazéifieur (17) présente une cloison de service (18) et une conduite d'évacuation (19), qui traversent l'enceinte de gazéifieur (13) et l'isolation (14).

5. Gazéifieur à 3 zones selon la revendication 1 ou 2, **caractérisé en ce que** l'apport de matières solides (1) présente une liaison flexible (2), comporte une hélice de transport et débouche horizontalement dans le bac de gazéifieur (3).

6. Gazéifieur à 3 zones selon la revendication 5, **caractérisé en ce que** l'apport de matières solides (1) débouche dans le bac de gazéifieur (3) presque deux tiers au-dessous de la limite de remplissage (33) de la matière solide.

7. Gazéifieur à 3 zones selon la revendication 1 ou 2, **caractérisé en ce que** l'enceinte de gazéifieur (13) supporte le bac de gazéifieur (3) avec l'espace de séparation (11) et l'entonnoir d'évacuation (6) par un raccord à bride (12) au moyen de l'enveloppe (4) et est supporté lui-même par un support (15).

8. Gazéifieur à 3 zones selon la revendication 1 ou 2, **caractérisé en ce que** le tronc de cône (21) est perforé, poinçonné, fendu et/ou réalisé en forme de tamis, et le corps de vanne d'écoulement (23) est réalisé en forme sphérique, conique, demi-coquille, plane ou cylindrique, et la paroi de guidage (26) est réalisé en forme angulaire, ronde, ovale, ridée ou profilée.

9. Procédé de fonctionnement d'un gazéifieur à 3 zones selon une ou plusieurs des revendications précédentes 1 à 8, dans lequel le gazéifieur à 3 zones, en état de fonctionnement, est traversé par un courant dans le même sens de bas en haut, effectuant ainsi une conversion continue de matières solides carbonées par oxidation et réduction sélective et partielle au moyen des zones de gazéification adaptives Z1 et Z2 ainsi qu'au moyen de la zone de gazéification adaptive Z3 avec une post-réduction et une post-oxidation sous des conditions atmosphériques définies, la dimension de l'aperture en fente annulaire centrale (32) étant réglée, ce qui engendre des courants turbulents.

10. Procédé de fonctionnement d'un gazéifieur à 3 zones selon la revendication 9, **caractérisé en ce que**
• le bac de gazéifieur (3) est rempli par l'apport de matières solides (1) avec des matières solides carbonées ou avec un mélange de matière solide-gaz et est alimenté de bas en haut, par le fond perforé en forme de gouttière disposé dans la partie inférieure du bac de gazéifieur (3), sous addition régulée d'agent de gazéification préchauffé, de manière à produire dans la zone de gazéification adaptive Z1, à l'état de fonctionnement requis en ce qui concerne la température, un flottement fluidisé du lit fixe à une température d'environ 800 °C avec une conversion thermochimique réactive des matières solides carbonées en un gaz de synthèse à fort pouvoir calorifique,
• la matière solide libérée lors du flottement et pas encore convertie est soumise à une autre conversion thermochimique à environ 1300 °C dans la zone de gazéification adaptive suivante Z2, au-dessus de la limite de remplissage,
• cette opération est renforcée par l'introduction séparée de gaz de carbonisation, d'agent de gazéification, et de vapeur surchauffée par l'injecteur (10) dans la zone de gazéification Z2 et par la conduite des gaz par l'aperture radiale en fente annulaire (22) controlée,
• la distribution de vitesse résultante sur les zones de gazéification adaptives Z1 et Z2 et au niveau du passage turbulent de l'aperture en fente annulaire centrale (32) à l'espace libre de gazéifieur (20) de la zone de gazéification adaptive Z3 à environ 950 °C a un effet de prolongation sur le temps de séjour du carbone résiduel encore présent à l'état flottant et sur sa conversion presque complète en gaz de synthèse,
de sorte que les composés organiques soient convertis en un gaz de synthèse à fort pouvoir calorifique et les matières étrangères inertes, à densité supérieure au mélange de carbone fluidisé, descendent et soient ainsi évacuées par le fond perforé (35) en forme de gouttière, l'entonnoir d'évacuation (6), le sas (7) et le dispositif d'évacuation (8), les déchets non séparables étant enlevés au-dessus du fond perforé (35) en forme de gouttière par l'évacuation d'impuretés (5), réglant le niveau de remplissage des matières solides carbonées qui sont introduites dans le bac de gazéifieur (3) et, par conséquent, la limite de remplissage (33) et évacuant le gaz de synthèse produit dans la partie supérieure du gazéifieur.
